# EUROPÄISCHE PATENTSCHRIFT

(11) **EP 0 320 856 B1**
(45) Veröffentlichungstag und Bekanntmachung des Hinweises auf die Patenterteilung: **15.09.1993**
(21) Anmeldenummer: 88120750.0
(22) Anmeldetag: 12.12.1988
(51) Int. Cl.: H04J 3/16, H04J 3/07

(54) **Verfahren zur Übertragung von Zeitmultiplexsignalen**
Method of transmission for time-multiplexed-signals
Méthode de transmission pour signaux en multiplex temporel

(30) Priorität: 15.12.1987 DE 3742505; 20.01.1988 DE 3801552
(43) Veröffentlichungstag der Anmeldung: 21.06.1989
(73) Patentinhaber: SIEMENS AKTIENGESELLSCHAFT, 80333 München (DE)
(72) Erfinder: Pospischil, Reginhard, Dr., D-8032 Lochham (DE)

(56) Entgegenhaltungen:
- GB-A- 2 125 256
- COMMUNICATION & TRANSMISSION, Band 7, Nr. 3, 1985, Seiten 29-38, Paris, FR; F. FERRET et al.: "TM 45/140 multiplexeur d'interconnexion entre les hiérarchies numérique européenne et américaine"
- UNION INTERNATIONALE DES TELECOMMUNICATIONS, CCITT, Band 3, Nr. III.3, VII "Assemblée Plénière", 10.-21. November 1980, Genf, Seiten 144-154

## Beschreibung

Die Erfindung bezieht sich auf ein Verfahren zur Übertragung von Zeitmultiplexsignalen in einem Grund-Pulsrahmen einer Digitalsignal-Multiplexhierarchie in einem synchronen Netz.

Im CCITT, Yellow Book, Volume III, Fascicle III.3, VIIth Plenary Assembly Geneva, 10-21 November 1980, Seiten 144 bis 155, sind in der Empfehlung G.751 die Rahmenbedingungen für Multiplexsysteme der europäischen Hierarchie beschrieben.

Aus "Commutation & Transmission" 7(1985) no.3, Paris, France, Seiten 29 bis 38 ist ein Multplexersystem bekannt, das es gestattet ein Multiplexsignal mit der in USA üblichen Nominaldatenrate von 45 Mbit/s über in Europa übliche Verbindungswege mit 140 und 565 Mbit/s zu übertragen.

Für Verfahren zur Übertragung von Mutliplexsignalen sowohl der europäischen als auch der USA-Hierarchie mit geeigneten Grund-Pulsrahmen werden seitens der CEPT-Länder und den USA bereits Vorschläge unterbreitet, die bei unterschiedlichen Digitalsignal-Multiplexhierarchien jeweils der eigenen Interessenlage entsprachen.

Aufgabe der Erfindung ist es, ein Verfahren anzugeben, bei dem Zeitmultiplexsignale sowohl der Bitraten von 2048 kbit/s als auch von 1544 kbit/s und möglichst auch von 8448 kbit/s und 6312 kbit/s übertragen werden können und in dem eine Zusammenfassung sowohl zu 34 368- als auch 44 736-kbit/s-Signalen möglich ist. Die jeweils erstgenannten Bitraten stammen aus der CEPT- oder europäischen Hierarchie und die letztgenannten aus der nordamerikanischen.

Mit einem derartigen Verfahren mit einem Grund-Pulsrahmen wird weltweit ein Einheitsrahmen verwendet, der Signale beider Hierarchien aufnehmen, zusammenfassen und abgeben kann. Für die oberen Hierarchie-Ebenen mit einer Bitrate von 139 264 kbit/s oder einem Vielfachen dieser Bitrate kann Kompatibilität hergestellt werden.

Ausgehend von einem Verfahren der einleitend geschilderten Art wird diese Aufgabe erfindungsgemäß für den envelope-strukturierten Teil dadurch gelöst, daß im envelope-strukturierten Teil entweder 16 Hauptblöcke zu 16 Spalten oder 12 Hauptblöcke zu 21 Spalten und weitere Spalten für Zusatzblöcke vorgesehen sind.

Insbesondere für die CEPT-Hierarchie ist es vorteilhaft, wenn 261 Spalten vorgesehen sind, wenn 16 Hauptblöcke mit je 16 Spalten vorgesehen sind, wenn dem ersten Hauptblock ein erster Zusatzblock mit 4 Spalten zur wahlweisen Belegung mit Zusatzsignalen vorangestellt ist und wenn zwischen dem achten und dem neunten Hauptblock ein zweiter Zusatzblock mit einer Spalte zur wahlweisen Belegung mit Zusatz- oder Nutzsignalen vorgesehen ist.

Dasselbe gilt für eine Lösung, bei der 260 Spalten vorgesehen sind, bei der 16 Hauptblöcke mit je 16 Spalten vorgesehen sind, bei der dem ersten Hauptblock ein erster Zusatzblock mit 3 Spalten zur wahlweisen Belegung mit Zusatzsignalen vorangestellt ist und bei der zwischen dem achten und dem neunten Hauptblock ein zweiter Zusatzblock mit 1 Spalte zur wahlweisen Belegung mit Zusatz-und Nutzsignalen vorgesehen ist.

Vorteilhaft ist es weiter, wenn daß im envelope-strukturierten Teil die Hauptblöcke und die Zusatzblöcke zusammen 264 Spalten umfassen.

Eine vorteilhafte Ausgestaltung des letztgenannten Teils insbesondere für die CEPT-Hierarchie besteht darin, daß 16 Hauptblöcke mit je 16 Spalten vorgesehen sind, daß dem ersten Hauptblock ein erster Zusatzblock mit 4 Spalten zur wahlweisen Belegung mit Zusatzsignalen vorangestellt ist und daß zwischen dem achten und dem neunten Hauptblock ein zweiter Zusatzblock mit 4 Spalten zur wahlweisen Belegung mit Zusatz- oder Nutzsignalen vorgesehen ist.

Insbesondere für die US-Hierarchie ist es dagegen vorteilhaft, wenn 12 Hauptblöcke mit je 21 Spalten vorgesehen sind, wenn dem ersten Hauptblock ein erster Zusatzblock mit 4 Spalten zur wahlweisen Belegung mit Zusatzsignalen vorangestellt ist und wenn zwischen dem vierten und dem fünften Hauptblock ein zweiter Zusatzblock sowie zwischen dem achten und dem neunten Hauptblock ein dritter Zusatzblock mit jeweils 4 Spalten zur wahlweisen Belegung mit Zusatz- oder Nutzsignalen vorgesehen sind.

Dasselbe gilt für eine Lösung, die dadurch gekennzeichnet ist, daß 12 Hauptblöcke mit je 21 Spalten vorgesehen sind, daß dem ersten Hauptblock ein erster Zusatzblock mit 3 Spalten zur wahlweisen Belegung mit Zusatzsignalen vorangestellt ist und daß zwischen dem dritten und dem vierten Hauptblock ein zweiter Zusatzblock mit 3 Spalten, zwischen dem sechsten und dem siebten Hauptblock ein dritter Zusatzblock mit 3 Spalten sowie zwischen dem neunten und dem zehnten Hauptblock ein vierter Zusatzblock mit 3 Spalten jeweils zur wahlweisen Belegung mit Zusatz- oder Nutzsignalen vorgesehen sind.

Ausgestaltungen dieser envelope-strukturierten Teile sind Unteransprüchen zu entnehmen.

4 Spalten bieten die Struktur für eine Übertragung eines 2048- und 16 Spalten die für eine Übertragung eines 8448-kbit/s-Signals. Ein 1544-kbit/s-Signal benötigt 3 Spalten und ein 6312-kbit/s-Signal 12 Spalten. Diese im envelope-strukturierten Teil übertragenen Signale können unter den in den Ausführungsbeispielen aufgeführten Bedingungen zu vier 34 368- oder drei 44 736-kbit/s-Signalen zusammengefaßt werden, die wiederum in ein 139 264-kbit/s-Signal einfügbar sind. Alle Signale können synchron oder plesiochron sein. Besonders vorteilhaft ist, wenn die Spaltenanzahl 264 für die CEPT-Hierarchie durch 4 und für die US-Hierarchie durch 3 teilbar ist.

Je ein Typ von envelope-strukturiertem Teil erlaubt eine Übertragung von Signalen der CEPT- oder der US-Hierarchie ohne Verlust an Übertragungskapazität. Es lassen sich jedoch jeweils auch genügend Signale der anderen Hierarchie übertragen.

Anhand von Ausführungsbeispielen wird die Erfindung nachstehend näher erläutert.
- Fig. 1: zeigt die Struktur des erfindungsgemäß zur Übertragung Grund-Pulsrahmens,
- Fig. 2: zeigt einen envelope-strukturierten Teil vorzugsweise für 2048-kbit/s-Signale,
- Fig. 3: zeigt eine zweite Variante dieses Teils,
- Fig. 4: zeigt eine dritte Variante dieses Teils,
- Fig. 5: zeigt einen anderen envelope-strukturierten Teil vorzugsweise für 1544-kbit/s-Signale und
- Fig. 6: zeigt eine zweite Variante dieses anderen Teils.

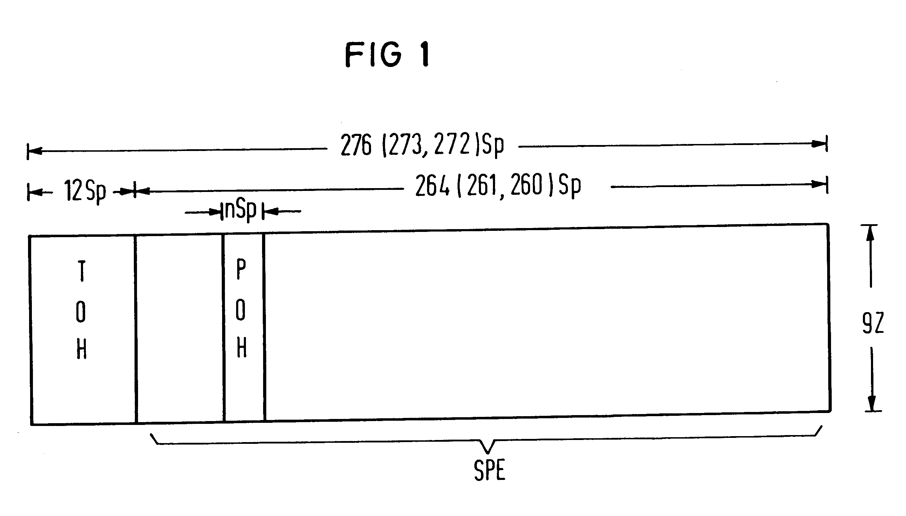

Fig. 1 zeigt die Struktur des erfindungsgemäß verwendeten Grund-Pulsrahmens einer Länge von insbesondere 2484 Byte. Zur graphischen Darstellung wurde der Grund-Pulsrahmen in neun Abschnitte zerlegt, die übereinander als Block angeordnet sind, so daß vorzugsweise 276 Spalten Sp und 9 Zeilen Z entstehen. Die ersten 12 Spalten bilden den Kopfteil TOH, der im folgenden nicht mehr erwähnt wird. Die restlichen 264 Spalten umfassen einen envelope-strukturierten Teil SPE. Dieser kann auch lediglich 261 oder 260 Spalten enthalten. Innerhalb dieses Teils SPE ist ein Pfadkopfteil (path overhead) POH mit n Spalten vorgesehen, der die Nutzsignale bis zum Demultiplexen begleitet.

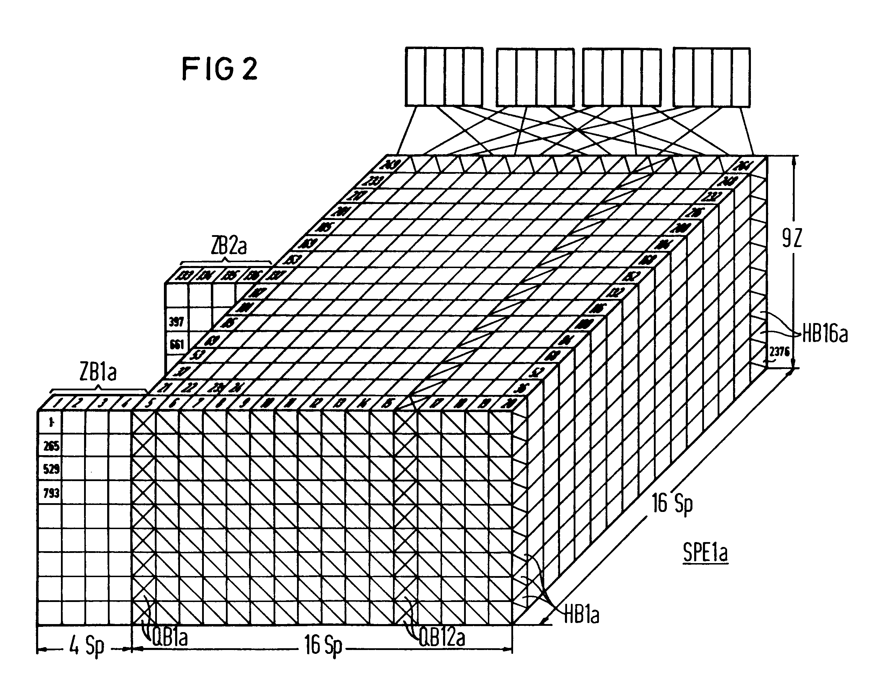

Fig. 2 zeigt einen envelope-strukturierten Teil SPE1a mit 264 Spalten. Zeichnerisch besteht eine Spalte Sp aus 9 aufeinandergestellten Würfeln, die jeweils ein Byte bzw. ein Oktett enthalten. 16 Hauptblöcke HB1a-HB16a sind hintereinander angeordnet. Links sind Zusatzblöcke ZB1a und ZB2a angefügt. Die Bytes sind von 1 bis 2376 durchnumeriert. Würfel, die von vorn gesehen einen Strich von links oben nach rechts unten tragen, bilden Hauptblöcke HB1a und HB16a. Die weiteren Hauptblöcke HB2a bis HB15a liegen dazwischen. Würfel, die von vorn gesehen den anderen Diagonalstrich tragen, bilden Querblöcke QB1a und QB12a.

Die Quadrate in der Fig. 2 oben symbolisieren 34 368-kbit/s-Signale, die jeweils aus vier 8448-kbit/s-Signalen zusammengesetzt sind. Letztere können ihrerseits in ein 139 264-kbit/s-Signal eingefügt werden. Die Linien zum Teil SPEa zeigen die Querblöcke, aus denen Daten für die 34 368-kbit/s-Signale entnommen werden.

Jeweils vier Spalten innerhalb der Hauptblöcke HB1a - HB16a können für die Aufnahme eines 2048-kbit/s-Signals vorgesehen sein, beispielsweise die Spalten 20, 84, 152 und 216 oder die Spalten 5, 69, 137 und 201. Für eine Bildung von vier 34 368-kbit/s-Signale werden Daten aus den Spalten 5-20, 69-84, 137-152 und 201-216, aus den Spalten 21-36, 85-100, 153-168 und 217-232 aus den Spalten 37-52, 101-116, 169-184 und 233-248 bzw. aus den Spalten 53-68, 117-132, 185-200 und 249-264 jeweils jedes vierten Querblocks entnommen. 16 Spalten bieten einem 8448-kbit/s-Signal Platz.

Es können aber auch 1544-kbit/s-Signale in jeweils drei Spalten ohne anschließende Umrangierung übertragen werden. Dazu können die Spalten 5-25, 93-113 und 181-201, die Spalten 26-46, 114-134 und 202-222, die Spalten 47-67, 135-155 und 223-243 bzw. die Spalten 68-88, 156-176 und 244-264 zusammengefaßt werden. Die Spalten 1-4, 89-92 und 177-180 dienen der Aufnahme von Zusatzsignalen.

Für eine Bildung von vier 34 368-kbit/s-Signalen aus 1544-kbit/s-Signalen können Daten aus den Spalten 5-20, 85-100, 169-184, aus den Spalten 21-36, 101-116 und 185-200, aus den Spalten 37-52, 117-132 und 201-216, aus den Spalten 53-68, 137-152 und 217-252 bzw. aus den Spalten 69-84, 153-168 und 233-248 jedes vierten Querblocks jeweils versetzt entnommen werden. Die Spalten 249-264 sind für Zusatzsignale vorgesehen.

Querblöcke QB1a bis QB16a können jeweils für die Aufnahme von vier 2048- oder fünf 1544-kbit/s-Signalen vorgesehen sein. Die bei letzteren freibleibende Spalte kann Zusatzsignale aufnehmen.

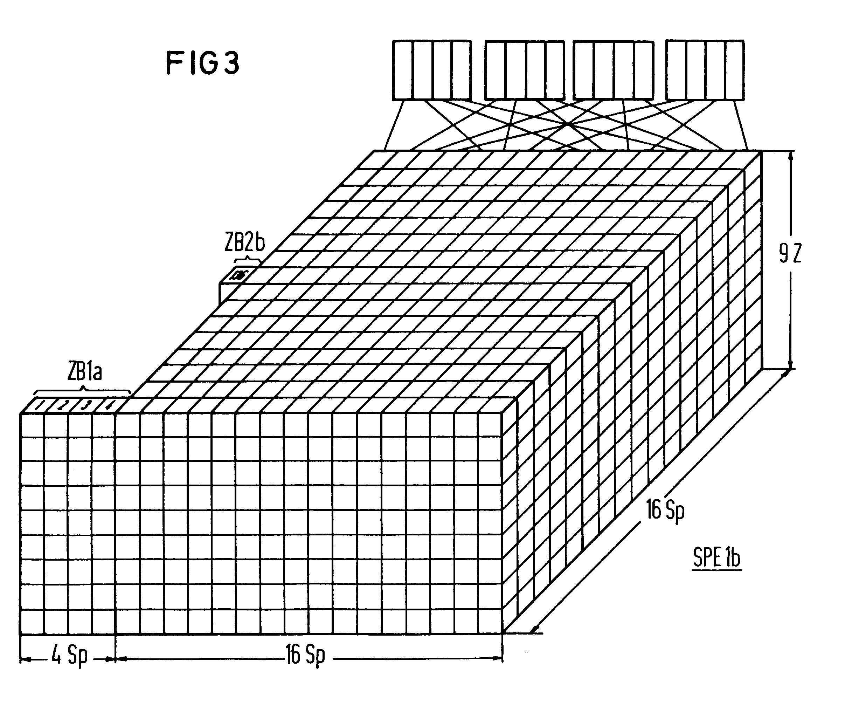

Fig. 3 zeigt einen envelope-strukturierten Teil SPE1b mit der bekannten Anzahl von 261 Spalten. Er unterscheidet sich von dem nach Fig. 1 lediglich dadurch, daß der zweite Zusatzblock ZB2b nicht 4 Spalten sondern nur eine Spalte enthält und damit die Spalten 133 bis 135 fehlen.

In diesem envelope-strukturierten Teil SPE1b sind alle bisher aufgeführten Belegungen möglich, ausgenommen der, bei der der zweite Zusatzblock ZB2a mit 1544-kbit/s-Signalen belegt wurde.

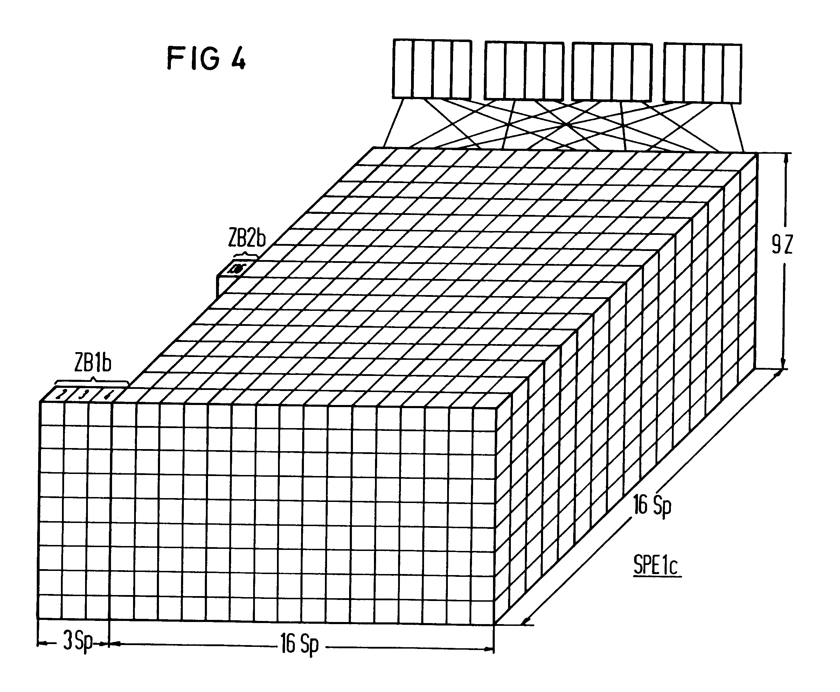

Dasselbe gilt für den envelope-strukturierten Teil SPE1c nach Fig. 4, der sich gegenüber dem nach Fig. 3 lediglich dadurch unterscheidet, daß der erste Zusatzblock ZB1b lediglich 3 Spalten umfaßt. Dies reicht für Zusatzsignale aus. Die Belegung der Hauptblöcke HB1a-HB16a kann die gleiche sein wie im envelope-strukturierten Teil SPE1b nach Fig. 3.

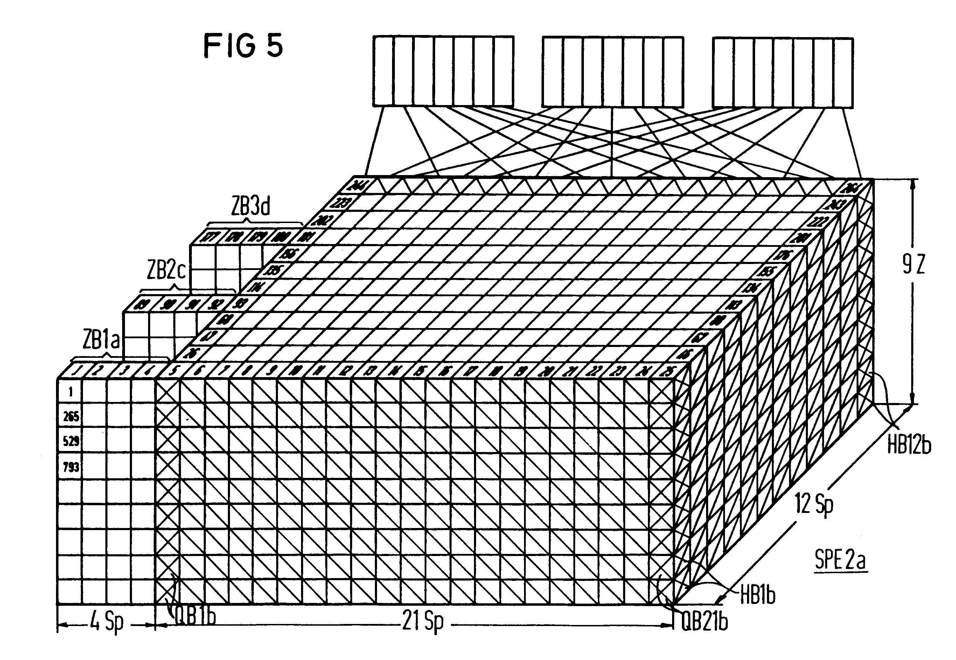

In Fig. 5 ist im envelope-strukturierten Teil SPE2a dieselbe Anzahl von Spalten Sp wie in Fig. 1 jedoch anders angeordnet. Es gibt 12 Hauptblöcke HB1b-HB12b, die jeweils 21 Spalten Sp umfassen. Außerdem sind 3 Zusatzblöcke ZB1a, ZB2c und ZB3a vorgesehen.

Die 3 Rechtecke im oberen Teil der Fig. 5 stellen symbolisch 44 736-kbit/s-Signale dar, die sieben 6312-kbit/s-Signale oder achtundzwanzig 1544-kbit/s-Signale oder auch 2048-kbit/s-Signale enthalten und in ein 139 264-kbit/s-Signal überführt werden können. Die Linien zum Teil SPE2a zeigen die Querblöcke, aus denen Daten für die 44 736-kbit/s-Signale entnommen werden.

Für eine Bildung von drei 44 736-kbit/s-Signalen aus 1544-kbit/s-Signalen können Signale aus den Spalten 5-25, 93-113 und 181-201, aus den Spalten 26-46, 114-134 und 202-222, aus den Spalten 47-67, 135-155 und 223-243 bzw. aus den Spalten 68-88, 156-176 und 244-264 jedes dritten Querblocks jeweils versetzt entnommen werden.

2048-kbit/s-Signale, die nicht umrangiert werden sollen, können in den Spalten 5-20, 69-84, 137-152, und 201-216, in den Spalten 21-36, 85-100, 153-168 und 217-232, in den Spalten 37-52, 101-116, 169-180 und 233-248 bzw. in den Spalten 53-68, 117-132, 185-200 und 249-264 untergebracht werden. Die Spalten 133-136 sind für Zusatzsignale vorgesehen.

Für eine Bildung von drei 44 736-kbit/s-Signalen aus 2048-kbit/s-Signalen können Daten aus den Spalten 5-25, 68-88, 135-155 und 202-222, aus den Spalten 26-46, 93-113, 156-176 und 223-243 bzw. aus den Spalten 47-67, 114-134, 181-201 und 244-264 jedes dritten Querblocks jeweils versetzt entnommen werden.

In den Querblöcken können entweder drei 2048- oder vier 1544-kbit/s-Signale übertragen werden.

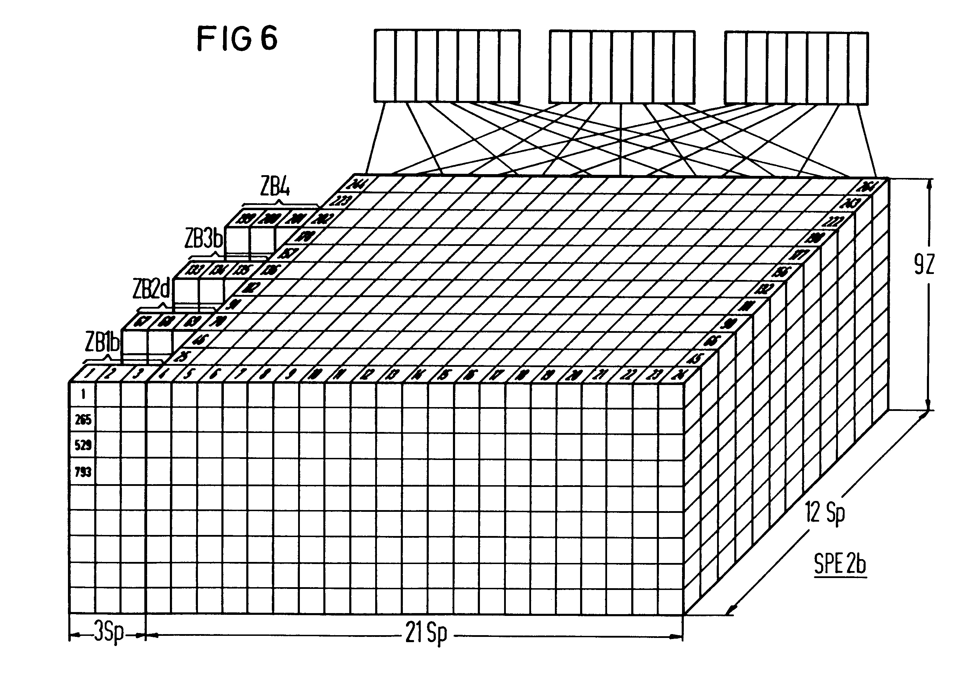

Auch der envelope-strukturierte Teil (SPE2b) nach Fig. 6 enthält Hauptblöcke HB1b-HB12b wie Fig. 5. Es sind jedoch vier Zusatzblöcke ZB1b, ZB2d, ZB3b und ZB4 mit je drei Spalten vorgesehen. Dadurch ergibt sich eine andere Numerierung der Spalten.

Zur Bildung von drei 44 736-kbit/s-Signalen aus 1544-kbit/s-Signalen werden Daten aus den Spalten 4-24, 70-90, 136-156 und 202-222, aus den Spalten 25-45, 91-111, 157-177 und 223-243 und aus den Spalten 46-66, 112-132, 178-198 und 244-264 jedes dritten Querblocks jeweils versetzt entnommen.

Zur Bündelung von drei 44 736-kbit/s-Signalen aus 2048-kbit/s-Signalen werden Daten aus den Spalten 4-24, 91-111 und 178-198, aus den Spalten 25-45, 112-132 und 202-222, aus den Spalten 46-66, 136-156 und 223-243 sowie aus den Spalten 70-90, 157-177 und 244-264 jedes dritten Querblocks jeweils versetzt entnommen.

Die Querblöcke können in einem solchen envelope-strukturierten Teil SPE2b entweder mit drei 2048- oder mit vier 1544-kbit/s-Signalen belegt werden.

## Patentansprüche

1. Verfahren zur Übertragung von Zeitmultiplexsignalen in einem Grund-Pulsrahmen einer Digitalsignal-Multiplexhierarchie in einem synchronen Netz, der ein Kopfteil für Überwachungssignale aus Übertragungsabschnitten und mit einem envelope-strukturierten Teil für Nutz- und Zusatzsignale mit 9 Zeilen (Z) und Spalten (Sp) mit Byte-Einteilung (Oktette) aufweist,
**dadurch gekennzeichnet,**
daß im envelope-strukturierten Teil (SPE1a, SPE1b, SPE1c, SPE2a, SPE2b) entweder 16 Hauptblöcke (HB1a-HB16a) zu 16 Spalten (SP) oder 12 Hauptblöcke (HB1b-HB12b) zu 21 Spalten (Sp) und weitere Spalten (Sp) für Zusatzblöcke (ZB1a, ZB1b, ZB2a, ZB2b, ZB2c, ZB2d, ZB3a, ZB3b, ZB4) vorgesehen sind.

2. Verfahren nach Anspruch 1,
**dadurch gekennzeichnet,**
daß 261 Spalten (Sp) vorgesehen sind, daß 16 Hauptblöcke (HB1a-HB16a) mit je 16 Spalten (Sp) vorgesehen sind,
daß dem ersten Hauptblock (HB1a) ein erster Zusatzblock (ZB1a) mit 4 Spalten zur wahlweisen Belegung mit Zusatzsignalen vorangestellt ist und
und daß zwischen dem achten (HB8a) und dem neunten (HB9a) Hauptblock ein zweiter Zusatzblock (ZB2b) mit einer Spalte zur wahlweisen Belegung mit Zusatz- oder Nutzsignalen vorgesehen ist.

3. Verfahren nach Anspruch 1,
**dadurch gekennzeichnet,**
daß 260 Spalten (Sp) vorgesehen sind,
daß 16 Hauptblöcke (HB1a-HB16a) mit je 16 Spalten (Sp) vorgesehen sind,
daß dem ersten Hauptblock (HB1a) ein erster Zusatzblock (ZB1b) mit 3 Spalten zur wahlweisen Belegung mit Zusatzsignalen vorangestellt ist und
daß zwischen dem achten (HB8a) und dem neunten (HB9a) Hauptblock ein zweiter Zusatzblock (ZB2b) mit 1 Spalte zur wahlweisen Belegung mit Zusatz- und Nutzsignalen vorgesehen ist.

4. Verfahren nach Anspruch 1,
**dadurch gekennzeichnet,**
daß im envelope-strukturierten Teil (SPE1a; SPE2a; SPE2b) die Hauptblöcke (HB1a-HB16a; HB1b-HB12b) und die Zusatzblöcke (ZB1a, ZB2a; ZB1a, ZB2c, ZB3a; ZB1b, ZB2b, ZB3b, ZB4) zusammen 264 Spalten (Sp) umfassen.

5. Verfahren nach Anspruch 4,
**dadurch gekennzeichnet,**
daß 16 Hauptblöcke (HB1a-HB16a) mit je 16 Spalten (Sp) vorgesehen sind,
daß dem ersten Hauptblock (HB1a) ein erster Zusatzblock (ZB1a) mit 4 Spalten (Sp) zur wahlweisen Belegung mit Zusatzsignalen vorangestellt ist und
daß zwischen dem achten (HB8a) und dem neunten (HB9a) Hauptblock ein zweiter Zusatzblock (ZB2a) mit 4 Spalten (Sp) zur wahlweisen Belegung mit Zusatz- oder Nutzsignalen vorgesehen ist.

6. Verfahren nach Anspruch 2, 3 oder 5,
**dadurch gekennzeichnet,**
daß jeweils 4 Spalten (Sp) der 16 Hauptblöcke (HB1a-HB16a) als Struktur für die Aufnahme eines 2048-kbit/s-Signals vorgesehen sind.

7. Verfahren nach Anspruch 6,
**dadurch gekennzeichnet,**
daß die Spalten (Sp) bei vierspaltigen Zusatzblöcken (ZB1a, ZB2a) von 1 am Anfang bis 264 am Ende des Grund-Pulsrahmens durchnumeriert sind,
daß bei verkürzten Zusatzblöcken (ZB1b,ZB2b) die Nummern der entfallenen Spalten (Sp) weggelassen sind und daß für eine Bildung von vier 34 368-kbit/s-Signalen Daten aus den Spalten 5-20, 69-84, 137-152 und 201-216, aus den Spalten 21-36, 85-100, 153-168, und 217-232, aus den Spalten 37-52, 101-116, 169-184 und 233-248 bzw. aus den Spalten 53-68, 117-132, 185-200 und 249-264 jedes vierten Querblocks jeweils versetzt entnommen werden.

8. Verfahren nach Anspruch 2, 3 oder 5,
**dadurch gekennzeichnet,**
daß jeweils 3 Spalten (Sp) der 16 Hauptblöcke (HB1a-HB16a) und wahlweise des zweiten Zusatzblocks (ZB2a, ZB2b) als Struktur für die Aufnahme von 1544-kbit/s-Signalen vorgesehen sind.

9. Verfahren nach Anspruch 5 und 8,
**dadurch gekennzeichnet,**
daß die Spalten (Sp) von 1 am Anfang bis 264 am Ende des Grund-Pulsrahmens durchnumeriert sind,
daß die Spalten 5-25, 93-113 und 181-201, die Spalten 26-46, 114-134 und 202-222, die Spalten 47-67, 135-155 und 223-243 bzw. die Spalten 68-88, 156-176 und 244-264 zusammengefaßt sind und
daß die Spalten 1-4, 89-92 und 177-180 der Aufnahme von Zusatzsignalen dienen.

10. Verfahren nach Anspruch 5 und 8,
**dadurch gekennzeichnet,**
daß die Spalten (Sp) von 1 am Anfang bis 264 am Ende des Grund-Pulsrahmens durchnumeriert sind,
daß für eine Bildung von vier 34 368-kbit/s-Signalen Daten aus den Spalten 5-20, 85-100 und 169-184, aus den Spalten 21-36, 101-116 und 185-200, aus den Spalten 37-52, 117-132 und 201-216, aus den Spalten 53-68, 137-152 und 217-252 bzw. aus den Spalten 69-84, 153-168 und 233-248 jedes vierten Querblocks jeweils versetzt entnommen werden und
daß die Spalten 249-264 für Zusatzsignale vorgesehen sind.

11. Verfahren nach den Ansprüchen 7 und 10,
**dadurch gekennzeichnet,**
daß die Spalten, die in allen 16 Hauptblöcken (HB1a-HB16a) dieselbe Position einnehmen (Querblöcke), jeweils für vier 2048- oder für drei 1544-kbit/s-Signale oder auch für ein 8448- oder für ein 6312-kbit/s-Signal vorgesehen sind und daß die bei 1544- oder 6312-kbit/s-Signalen freibleibende Spalte Zusatzsignale aufnehmen kann.

12. Verfahren nach Anspruch 4,
**dadurch gekennzeichnet,**
daß 12 Hauptblöcke (HB1b-HB12b) mit je 21 Spalten (Sp) vorgesehen sind,
daß dem ersten Hauptblock (HB1b) ein erster Zusatzblock (ZB1a) mit 4 Spalten zur wahlweisen Belegung mit Zusatzsignalen vorangestellt ist,
daß zwischen dem vierten (HB4b) und dem fünften (HB5b) Hauptblock ein zweiter Zusatzblock (ZB2b) sowie zwischen dem achten (HB8b) und dem neunten (HB9b) Hauptblock ein dritter Zusatz block (ZB3) mit jeweils 4 Spalten zur wahlweisen Belegung mit Zusatz- oder Nutzsignalen vorgesehen sind.

13. Verfahren nach Anspruch 12,
**dadurch gekennzeichnet,**
daß jeweils 3 Spalten (Sp) der 12 Hauptblöcke (HB1b-HB12b) als Struktur für eine Aufnahme von 1544-kbit/s-Signalen vorgesehen sind.

14. Verfahren nach Anspruch 13,
**dadurch gekennzeichnet,**
daß die Spalten von 1 am Anfang bis 264 am Ende des Grund-Pulsrahmens durchnumeriert sind und
daß für eine Bildung von drei 44 736-kbit/s-Signalen Daten aus den Spalten 5-25, 93-113 und 181-201, aus den Spalten 26-46, 114-134 und 202-222, aus den Spalten 47-67, 135-155 und 223-243 bzw. aus den Spalten 68-88, 156-176 und 244-264 jedes dritten Querblocks jeweils versetzt entnommen werden.

15. Verfahren nach Anspruch 12,
**dadurch gekennzeichnet,**
daß jeweils 4 Spalten (Sp) der 12 Hauptblöcke (HB1b-HB12b), des zweiten Zusatzblocks (ZB2c) und des dritten Zusatzblocks (ZB3) als Struktur zur Aufnahme von 2048-kbit/s-Signalen vorgesehen sind.

16. Verfahren nach Anspruch 15,
**dadurch gekennzeichnet,**
daß die Spalten von 1 am Anfang bis 264 am Ende des Grund-Pulsrahmens durchnumeriert sind,
daß die Spalten 5-20, 69-84, 137-152 und 201-216, die Spalten 21-36, 85-100, 153-168 und 217-232, die Spalten 37-52, 101-116, 169-180 und 233-248 bzw. die Spalten 53-68, 117-132, 185-200 und 249-264 zusammengefaßt sind und
daß die Spalten 133-136 für Zusatzsignale vorgesehen sind.

17. Verfahren nach Anspruch 12,
**dadurch gekennzeichnet,**
daß jeweils 4 Spalten der 12 Hauptblöcke (HB1b-HB12b) als Struktur zur Aufnahme von 2048-kbit/s-Signalen vorgesehen sind.

18. Verfahren nach Anspruch 17,
**dadurch gekennzeichnet,**
daß die Spalten von 1 am Anfang bis 264 am Ende des Grund-Pulsrahmens durchnumeriert sind und
daß für eine Bildung von drei 44 736-kbit/s-Signalen Daten aus den Spalten 5-25, 68-88, 135-155 und 202-222, den Spalten 26-46, 93-113, 156-176 und 223-243 bzw. den Spalten 47-67, 114-134, 181-201 und 244-264 jedes dritten Querblocks jeweils versetzt entnommen werden.

19. Verfahren nach Anspruch 4,
**dadurch gekennzeichnet,**
daß 12 Hauptblöcke (HB1b-HB12b) mit je 21 Spalten (Sp) vorgesehen sind,
daß dem ersten Hauptblock (HB1b) ein erster Zusatzblock (ZB1b) mit 3 Spalten zur wahlweisen Belegung mit Zusatzsignalen vorangestellt ist und
daß zwischen dem dritten (HB3b) und dem vierten (HB4b) Hauptblock ein zweiter Zusatzblock (ZB2d) mit 3 Spalten (Sp), zwischen dem sechsten (HB6b) und dem siebten (HB7b) Hauptblock ein dritter Zusatzblock (ZB3b) mit 3 Spalten (Sp) sowie zwischen dem neunten (HB9b) und dem zehnten (HB10b) Hauptblock ein vierter Zusatzblock (ZB4) mit 3 Spalten (Sp) jeweils zur wahlweisen Belegung mit Zusatz- oder Nutzsignalen vorgesehen sind.

20. Verfahren nach Anspruch 19,
**dadurch gekennzeichnet,**
daß jeweils 3 Spalten (Sp) der 12 Hauptblöcke (HB1b-HB12b) als Struktur für eine Aufnahme von 1544-kbit/s-Signalen vorgesehen sind.

21. Verfahren nach Anspruch 20,
**dadurch gekennzeichnet,**
daß die Spalten von 1 am Anfang bis 264 am Ende des Grundpulsrahmens durchnumeriert sind,
daß für eine Bildung von drei 44736-kbit/s-Signalen Daten aus den Spalten 4-24, 70-90, 136-156 und 202-222, aus den Spalten 25-45, 91-111, 157-177 und 223-243 bzw. aus den Spalten 46-66, 112-132, 178-198 und 244-264 jedes dritten Querblocks jeweils versetzt entnommen werden.

22. Verfahren nach Anspruch 19,
**dadurch gekennzeichnet,**
daß jeweils 4 Spalten (Sp) der 12 Hauptblöcke (HB1b bis HB12b) als Struktur für eine Aufnahme von 2048-kbit/s-Signalen vorgesehen sind.

23. Verfahren nach Anspruch 22,
**dadurch gekennzeichnet,**
daß die Spalten von 1 am Anfang bis 264 am Ende des Grund-Pulsrahmens durchnumeriert sind,
daß für eine Bildung von drei 447361-kbit/s-Signals Daten aus den Spalten 4-24, 91-111 und 178-198, aus den Spalten 25-45, 112-132 und 202-222, aus den Spalten 46-66, 136-156 und 223-243 bzw. aus den Spalten 70-90, 157-177 und 244-264 jedes dritten Querblocks jeweils versetzt entnommen werden.

24. Verfahren nach Anspruch 14 und 18 oder 21 und 23,
**dadurch gekennzeichnet,**
daß die Spalten, die in allen 12 Hauptblöcken (HB1b-HB12b) dieselbe Position einnehmen (Querblöcke), jeweils für drei 2048-oder für vier 1544-kbit/s-Signale vorgesehen sind.

## Claims

1. Method for the transmission of time-division multiplex signals in a basic pulse frame of a digital signal multiplex hierarchy in a synchronous network, which frame exhibits a header part for monitoring signals comprising transmission portions and having an envelope-structured part for information and auxiliary signals having 9 rows (Z) and columns (Sp) with byte division (octet), characterised in that either 16 main blocks (HB1a-HB16a) of 16 columns (SP) each or 12 main blocks (HB1b-HB12b) of 21 columns (SP) each and further columns (SP) for auxiliary blocks (ZB1a, ZB1b, ZB2a, ZB2b, ZB2c, ZB2d, ZB3a, ZB3b, ZB4) are provided in the envelope-structured part (SPE1a, SPE1b, SPE1c, SPE2a, SPE2b).

2. Method according to Claim 1, characterised in that 261 columns (Sp) are provided, in that 16 main blocks (HB1a-HB16a) each having 16 columns (Sp) are provided, in that the first main block (HB1a) is preceded by a first auxiliary block (ZB1a) having 4 columns for optional occupation by auxiliary signals, and and [sic] in that a second auxiliary block (ZB2b) having one column for optional occupation by auxiliary or information signals is provided between the eighth (HB8a) and the ninth (HB9a) main blocks.

3. Method according to Claim 1, characterised in that 260 columns (Sp) are provided, in that 16 main blocks (HB1a-HB16a) each having 16 columns (Sp) are provided, in that the first main block (HB1a) is preceded by a first auxiliary block (ZB1b) having 3 columns for optional occupation by auxiliary signals, and in that a second auxiliary block (ZB2b) having 1 column for optional occupation by auxiliary and information signals is provided between the eighth (HB8a) and the ninth (HB9a) main blocks.

4. Method according to Claim 1, characterised in that in the envelope-structured part (SPE1a; SPE2a; SPE2b), the main blocks (HB1a-HB16a; HB1b-HB12b) and the auxiliary blocks (ZB1a, ZB2a; ZB1a, ZB2c; ZB3a; ZB1b, ZB2b, ZB3b, ZB4) together comprise 264 columns (Sp).

5. Method according to Claim 4, characterised in that 16 main blocks (HB1a-HB16a) each having 16 columns (Sp) are provided, in that the first main block (HB1a) is preceded by a first auxiliary block (ZB1a) having four columns (Sp) for optional occupation by auxiliary signals, and in that a second auxiliary block (ZB2a) having 4 columns (Sp) for optional occupation by auxiliary or information signals is provided between the eighth (HB8a) and the ninth (HB9a) main blocks.

6. Method according to Claim 2, 3 or 5, characterised in that in each instance 4 columns (Sp) of the 16 main blocks (HB1a-HB16a) are provided as structure for the reception of a 2048 kbit/s signal.

7. Method according to Claim 6, characterised in that, in the case of 4-column auxiliary blocks (ZB1a, ZB2a), the columns (Sp) are continuously numbered from 1 at the start to 264 at the end of the basic pulse frame, in that in the case of shortened auxiliary blocks (ZB1b, ZB2b) the numbers of the omitted columns (Sp) are omitted, and in that data are taken, offset in each instance, from the columns 5-20, 69-84, 137-152 and 201-216, from the columns 21-36, 85-100, 153-168, and 217-232, from the columns 37-52, 101-116, 169-184 and 233-248 or respectively from the columns 53-68, 117-132, 185-200 and 249-264 of each fourth transverse block for a formation of four 34,368 kbit/s signals.

8. Method according to Claim 2, 3 or 5, characterised in that in each instance 3 columns (Sp) of the 16 main blocks (HB1a-HB16a) and optionally of the second auxiliary block (ZB2a, ZB2b) are provided as structure for the reception of 1544 kbit/s signals.

9. Method according to Claims 5 and 8, characterised in that the columns (Sp) are continuously numbered from 1 at the start to 264 at the end of the basic pulse frame, in that the columns 5-25, 93-113 and 181-201, the columns 26-46, 114-134 and 202-222, the columns 47-67, 135-155 and 223-243 or respectively the columns 68-88, 156-176 and 244-264 are combined, and in that the columns 1-4, 89-92 and 177-180 serve for the reception of auxiliary signals.

10. Method according to Claims 5 and 8, characterised in that the columns (Sp) are continuously numbered from 1 at the start to 264 at the end of the basic pulse frame, in that data are taken, offset in each instance, from the columns 5-20, 85-100 and 169-184, from the columns 21-36, 101-116 and 185-200, from the columns 37-52, 117-132 and 201-216, from the columns 53-68, 137-152 and 217-252 or respectively from the columns 69-84, 153-168 and 233-248 of each fourth transverse block for formation of four 34,368 kbit/signals, and in that the columns 249-264 are provided for auxiliary signals.

11. Method according to Claims 7 and 10, characterised in that the columns which assume the same position (transverse blocks) in all 16 main blocks (HB1a-HB16a) are provided in each instance for four 2048 or for three 1544 kbit/s signals or alternatively for one 8448 or for one 6312 kbit/s signal, and in that the column which remains free in the case of 1544 or 6312 kbit/s signals is able to receive auxiliary signals.

12. Method according to Claim 4, characterised in that 12 main blocks (HB1b-HB12b) each having 21 columns (Sp) are provided, in that the first main block (HB1b) is preceded by a first auxiliary block (ZB1a) having 4 columns for optional occupation by auxiliary signals, in that between the fourth (HB4b) and the fifth (HB5b) main block there is provided a second auxiliary block (ZB2b) and between the eighth (HB8b) and the ninth (HB9b) main block there is provided a third auxiliary block (Zb3), said second and third auxiliary blocks each having 4 columns for optional occupation by auxiliary or information signals.

13. Method according to Claim 12, characterised in that in each instance 3 columns (Sp) of the 12 main blocks (HB1b-HB12b) are provided as structure for reception of 1544 kbit/s signals.

14. Method according to Claim 13, characterised in that the columns are continuously numbered from 1 at the start to 264 at the end of the basic pulse frame, and in that data are taken, offset in each instance, from the columns 5-25, 93-113 and 181-201, from the columns 26-46, 114-134 and 202-222, from the columns 47-67, 135-155 and 223-243 or respectively from the columns 68-88, 156-176 and 244-264 of each third transverse block for formation of three 44,736 kbit/s signals.

15. Method according to Claim 12, characterised in that in each instance 4 columns (Sp) of the 12 main blocks (HB1b-HB12b), of the second auxiliary block (ZB2c) and of the third auxiliary block (ZB3) are provided as structure for the reception of 2048 kbit/s signals.

16. Method according to Claim 15, characterised in that the columns are continuously numbered from 1 at the start to 264 at the end of the basic pulse frame, in that the columns 5-20, 69-84, 137-152 and 201-216, the columns 21-36, 85-100, 153-168 and 217-232, the columns 37-52, 101-116, 169-180 and 233-248 or respectively the columns 53-68, 117-132, 185-200 and 249-264 are combined, and in that the columns 133-136 are provided for auxiliary signals.

17. Method according to Claim 12, characterised in that in each instance 4 columns of the 12 main blocks (HB1b-HB12b) are provided as structure for the reception of 2048 kbit/s signals.

18. Method according to Claim 17, characterised in that the columns are continuously numbered from 1 at the start to 264 at the end of the basic pulse frame, and in that data are taken, offset in each instance, from the columns 5-25, 68-88, 135-155 and 202-222, the columns 26-46, 93-113, 156-176 and 223-243 or respectively the columns 47-67, 114-134, 181-201 and 244-264 of each third transverse block for formation of three 44,736 kbit/s signals.

19. Method according to Claim 4, characterised in that 12 main blocks (HB1b-HB12b) each having 21 columns (Sp) are provided, in that the first main block (HB1b) is preceded by a first auxiliary block (ZB1b) having 3 columns for optional occupation by auxiliary signals, and in that between the third (HB3b) and the fourth (HB4b) main block there is provided a second auxiliary block (ZB2d) having 3 columns (Sp), between the sixth (HB6b) and the seventh (HB7b) main block there is provided a third auxiliary block (ZB3b) having three columns (Sp) and between the ninth (HB9b) and the tenth (HB10b) main block there is provided a fourth auxiliary block (ZB4) having 3 columns (Sp) in each instance for optional occupation by auxiliary or information signals.

20. Method according to Claim 19, characterised in that in each instance 3 columns (Sp) of the 12 main blocks (HB1b-HB12b) are provided as structure for reception of 1544 kbit/s signals.

21. Method according to Claim 20, characterised in that the columns are continuously numbered from 1 at the start to 264 at the end of the basic pulse frame, in that data are taken, offset in each instance, from the columns 4-24, 70-90, 136-156 and 202-222, from the columns 25-45, 91-111, 157-177 and 223-243 or respectively from the columns 46-66, 112-132, 178-198 and 244-264 of each third transverse block for formation of three 44736 kbit/s signals.

22. Method according to Claim 19, characterised in that in each instance four columns (Sp) of the 12 main blocks (HB1b to HB12b) are provided as structure for reception of 2048 kbit/s signals.

23. Method according to Claim 22, characterised in that the columns are continuously numbered from 1 at the start to 264 at the end of the basic pulse frame, in that data are taken offset in each instance, from the columns 4-24, 91-111 and 178-198, from the columns 25-45, 112-132 and 202-222, from the columns 46-66, 136-156 and 223-243 or respectively from the columns 70-90, 157-177 and 244-264 of each third transverse block for formation of three 447361 kbit/s signals.

24. Method according to Claims 14 and 18 or 21 and 23, characterised in that the columns which assume the same position (transverse blocks) in all 12 main blocks (HB1b-HB12b) are provided in each instance for three 2048 or for four 1544 kbit/s signals.

## Revendications

1. Procédé pour transmettre des signaux à multiplexage temporel dans une trame d'impulsions de base d'une hiérarchie multiplex de signaux numériques dans un réseau synchrone, qui possède une partie d'en-tête pour des signaux de contrôle, constituée par des sections de transmission et une partie à structure d'enveloppe pour des signaux utiles et des signaux supplémentaires comportant 9 lignes (Z) et colonnes (Sp) avec une division en multiplets (octets), caractérisé par le fait
qu'il est prévu, dans la partie à structure d'enveloppe (SPE1a, SPE1b, SEP1c, SPE2a, SPE2b), soit 16 blocs principaux (HB1a-HB16a) disposés dans 16 colonnes (SE), soit 12 blocs principaux (HB1b-HB12b) disposés suivant 21 colonnes (Sp), et d'autres colonnes (Sp) pour des blocs supplémentaires (ZB1a, ZB1b, ZB2a, ZB2b, ZB2c, ZB2d, ZB3a, ZB3b, ZB4).

2. Procédé suivant la revendication 1, caractérisé par le fait
qu'il est prévu 261 colonnes (Sp),
qu'il est prévu 16 blocs principaux (HB1a-HB16a) comportant chacun 16 colonnes (Sp),
que le premier bloc principal (HB1a) est précédé par un premier bloc supplémentaire (ZB1a) comportant 4 colonnes pour l'occupation au choix par des signaux supplémentaires, et
qu'entre le huitième bloc principal (HB8a) et le neuvième bloc principal (HB9a), il est prévu un second bloc supplémentaire (ZB2b) comportant une colonne pour l'occupation au choix avec des signaux supplémentaires ou des signaux utiles.

3. Procédé suivant la revendication 1, caractérisé par le fait
qu'il est prévu 260 colonnes (Sp),
qu'il est prévu 16 blocs principaux (HB1a-HB16a) comportant chacun 16 colonnes (Sp),
que le premier bloc principal (HB1a) est précédé par un premier bloc supplémentaire (ZB1b) comportant 3 colonnes pour l'occupation au choix par des signaux supplémentaires, et qu'entre le huitième bloc principal (HB8a) et le neuvième bloc principal (HB9a), il est prévu un second bloc supplémentaire (ZB2b) comportant 1 colonne pour l'occupation au choix avec des signaux supplémentaires et des signaux utiles.

4. Procédé suivant la revendication 1, caractérisé par le fait
que dans la partie à structure d'enveloppe (SPE1a; SPE2a; SPE2b), les blocs principaux (HB1a-HB16a; HB1b-HB12b) et les blocs supplémentaires (ZB1a,ZB2a; ZB1a,ZB2c,2B3a; ZB1b,ZB2b,ZB3b,ZB4) comprennent conjointement 264 colonnes (Sp).

5. Procédé suivant la revendication 4, caractérisé par le fait
qu'il est prévu 16 blocs principaux (HB1a-HB16a) comportant chacun 16 colonnes (Sp),
que le premier bloc principal (HB1a) est précédé par un premier bloc supplémentaire (HB1a) comportant 4 colonnes (Sp) pour l'occupation au choix avec des signaux supplémentaires, et
qu'entre le huitième bloc principal (HB8a) et le neuvième bloc principal (HB9a) il est prévu un second bloc supplémentaire (ZB2a) comportant 4 colonnes (Sp) pour une occupation au choix avec des signaux supplémentaires ou des signaux utiles.

6. Procédé suivant la revendication 1, caractérisé par le fait
qu'il est prévu respectivement 4 colonnes (Sp) et 16 blocs principaux (HB1a-HB16a) en tant que structure pour la réception d'un signal à 2048 kbits/s.

7. Procédé suivant la revendication 6, caractérisé par le fait
que les colonnes (Sp) sont numérotées de 1 au début jusqu'à 264 à la fin de la trame d'impulsions de base, dans le cas de blocs supplémentaires (ZB1a, ZB2a) à quatre colonnes,
que dans le cas de blocs supplémentaires raccourcis (ZB1b, ZB2b), les numéros des colonnes manquantes (Sp) sont supprimés, et
que pour une formation de quatre signaux à 34 368 kbits/s, des données sont prélevées d'une manière respectivement décalée à partir des colonnes 5-20, 69-84, 137-152 et 201-216, à partir des colonnes 21-36, 85-100, 153-168 et 217-232, à partir des colonnes 37-52, 101-116, 169-184 et 233-248 ou à partir des colonnes 53-68, 117-132, 185-200 et 249-264 de chaque quatrième bloc transversal.

8. Procédé suivant la revendication 2, 3 ou 5, caractérisé par le fait
qu'il est prévu respectivement 3 colonnes (Sp) et 16 blocs principaux (HB1a-HB16a) et au choix du second bloc supplémentaires (ZB2a, ZB2b) en tant que structure pour la réception de signaux à 1544 kbits/s.

9. Procédé suivant les revendications 5 et 8, caractérisé par le fait
que les colonnes (Sp) sont numérotées de 1 au début jusqu'à 264 à la fin de la trame d'impulsions de base,
que les colonnes 5-25, 93-113 et 181-201, les colonnes 20-46, 114-134 et 200-222, les colonnes 47-67, 135-155 et 223-243 et les colonnes 68-88, 156-176 et 244-264 sont réunies, et
que les colonnes 1-4, 89-92 et 177-180 sont utilisées pour recevoir des signaux supplémentaires.

10. Procédé suivant les revendications 5 et 8, caractérisé par le fait
que les colonnes (Sp) sont numérotées de 1 au départ jusqu'à 264 à la fin de la trame d'impulsions de base,
que pour une formation de quatre signaux à 34 368 kbits/s, des données sont prélevées d'une manière respectivement décalée à partir des colonnes 5-20, 85-100 et 169-184, à partir des colonnes 21-36, 101-116 et 185-200, à partir des colonnes 37-52, 117-132 et 201-216 ou à partir des colonnes 69-84, 153-168 et 233-248 de chaque quatrième bloc transversal, et
que les colonnes 249-264 sont prévues pour des signaux supplémentaires.

11. Procédé suivant les revendications 7 et 10, caractérisé par le fait
que les colonnes, qui occupent dans l'ensemble des 16 blocs principaux (HB1a-HB16a), la même position (blocs transversaux), sont prévus respectivement pour quatre signaux à 2048 kbits/s ou pour trois signaux à 1544 kbits/s ou même pour un signal à 8448 kbits/s ou pour un signal à 6312 kbits/s, et
que les colonnes, qui restent libres dans le cas de signaux à 1544 ou à 6312 kbits/s peuvent recevoir des signaux supplémentaires.

12. Procédé suivant la revendication 4, caractérisé par le fait
qu'il est prévu 12 blocs principaux (HB1b-HB12b) comportant chacun 21 colonnes (Sp),
que le premier bloc principal (HB1b) est précédé par un premier bloc supplémentaire (ZB1a) comportant 4 colonnes pour l'occupation au choix par des signaux supplémentaires,
qu'entre le quatrième bloc principal (HB4b) et le cinquième bloc principal (HB5b) il est prévu un second bloc supplémentaire (ZB2b) et qu'entre le huitième bloc principal (HB8b) et le neuvième bloc principal (HB9b), il est prévu un troisième bloc supplémentaire (ZB3) comportant respectivement 4 colonnes pour réaliser l'occupation au choix avec des signaux supplémentaires ou des signaux utiles.

13. Procédé suivant la revendication 12, caractérisé par le fait
que respectivement 3 colonnes (Sp) des 12 blocs principaux (HB1b-HB12b) sont prévues en tant que structure pour recevoir des signaux à 1544 kbits/s.

14. Procédé suivant la revendication 13, caractérisé par le fait
que les colonnes sont numérotées de 1 au début jusqu'à 264 à la fin de la trame d'impulsions de base, et
que pour une formation de trois signaux à 44 736 kbits/s, des données sont prélevées d'une manière respectivement décalée à partir des colonnes 5-25, 93-113 et 181-201, à partir des colonnes 26-46, 114-134 et 202-222, à partir des colonnes 47-67, 135-155 et 223-243 et à partir des colonnes 68-88, 156-176 et 244-264 de chaque troisième bloc transversal.

15. Procédé suivant la revendication 12, caractérisé par le fait
que respectivement 4 colonnes (Sp) des 12 blocs principaux (HB1b-HB12b), du second bloc supplémentaire (ZB2c) et du troisième bloc supplémentaire (ZB3) sont prévues en tant que structures pour recevoir des signaux à 2048 kbits/s.

16. Procédé suivant la revendication 16, caractérisé par le fait
que les colonnes sont numérotées de 1 au début jusqu'à 264 à la fin de la trame d'impulsions de base,
que les colonnes 5-20, 69-84, 137-152 et 201-216, les colonnes 21-36, 85-100, 153-168 et 217-232, les colonnes 37-52, 101-116, 169-180 et 233-248 et les colonnes 53-68, 117-132, 185-200 et 249-264 sont réunies, et
que les colonnes 133-136 sont prévues pour des signaux supplémentaires.

17. Procédé suivant la revendication 12, caractérisé par le fait
que respectivement 4 colonnes des 12 blocs principaux (HB1b-HB12b) sont prévues en tant que structure servant à recevoir des signaux à 2048 kbits/s.

18. Procédé suivant la revendication 17, caractérisé par le fait
que les colonnes sont numérotées de 1 au début jusqu'à 264 à la fin de la trame d'impulsions de base, et
que pour une formation de trois signaux à 44 736 kbits/s, des données sont prélevées d'une manière respectivement décalée à partir des colonnes 5-25, 68-88, 135-155 et 202-222, à partir des colonnes 26-446, 93-113, 156-176 et 223-243 et des colonnes 47-167, 114-134, 180-201 et 244-264.

19. Procédé suivant la revendication 4, caractérisé par le fait
qu'il est prévu 12 blocs principaux (HB1b-HB12b) comportant chacun 21 colonnes (Sp),
que le premier bloc principal (HB1b) est précédé par un premier bloc supplémentaire (ZB1b) comportant 3 colonnes pour l'occupation au choix avec des signaux supplémentaires, et
qu'entre le troisième bloc principal (HB3b) et le quatrième bloc principal (HB4b) il est prévu un second bloc supplémentaire (ZB2d) comportant 3 colonnes (Sp), qu'entre le sixième bloc principal (HB6b) et le septième bloc principal (HB7b), il est prévu un troisième bloc supplémentaire (ZB3b) comportant 3 colonnes (Sp) et qu'entre le neuvième bloc principal (HB9b) et le dixième bloc principal (HB10b) il est prévu un quatrième bloc supplémentaire (ZB4) comportant 3 colonnes (Sp), respectivement pour l'occupation au choix avec des signaux supplémentaires ou des signaux utiles.

20. Procédé suivant la revendication 19, caractérisé par le fait
que respectivement 3 colonnes (Sp) des 12 blocs principaux (HB1b-HB12b) sont prévues en tant que structure pour recevoir des signaux à 1544 kbits/s.

21. Procédé suivant la revendication 20, caractérisé par le fait
que les colonnes sont numérotées de 1 au début jusqu'à 264 à la fin de la trame d'impulsions de base,
que pour une formation de trois signaux à 44 736 kbits/s, des données sont prélevées respectivement de façon décalée à partir des colonnes 4-24, 70-90, 136-156 et 202-222, à partir des colonnes 25-45, 91-111, 157-177 et 223-243 et à partir des colonnes 46-66, 112-132, 178-198 et 244-264 de chaque troisième bloc transversal.

22. Procédé suivant la revendication 19, caractérisé par le fait
que respectivement 4 colonnes (Sp) des 12 blocs principaux (HB1b à HB12b) sont prévues en tant que structure pour recevoir des signaux à 2048 kbits/s.

23. Procédé suivant la revendication 22, caractérisé par le fait
que les colonnes sont numérotées depuis 1 au début jusqu'à 264 à la fin de la trame d'impulsions de base,
que pour une formation de trois signaux à 44 736 kbits/s, des données sont prélevées d'une manière respectivement décalée à partir des colonnes 4-24, 91-111 et 178-198, à partir des colonnes 25-45, 112-132 et 202-222, à partir des colonnes 46-66, 136-156 et 223-243 ou à partir des colonnes 70-90, 157-177 et 244-264 de chaque troisième bloc transversal.

24. Procédé suivant les revendications 14 et 18 ou 21 et 23, caractérisé par le fait
que les colonnes, qui occupent la même position (blocs transversaux) dans l'ensemble des 12 blocs principaux (HB1b-HB12b), sont prévues respectivement pour trois signaux à 2048 kbits/s ou pour quatre signaux à 1544 kbits/s.
